# EUROPÄISCHE PATENTANMELDUNG

(11) **EP 2 546 500 A1**
(43) Veröffentlichungstag der Anmeldung: **16.01.2013**
(21) Anmeldenummer: 12166588.9
(22) Anmeldetag: 03.05.2012
(51) Int. Cl.: F02D 41/22, G01M 15/04

(54) **Verfahren zur Maschinenstandsüberwachung**

(30) Priorität: 12.07.2011 DE 102011079015
(71) Anmelder: MAN Diesel & Turbo SE, 86153 Augsburg (DE)
(72) Erfinder: Bogatzki, Dorothea, 40593 Düsseldorf (DE); Küper, Peter, 46244 Bottrop (DE); Sobolyev, Oleksandr, 40597 Düsseldorf (DE)

(57) **Zusammenfassung**

Verfahren zur Maschinenzustandsüberwachung, wobei während des Betriebs einer Maschine mindestens ein gemessener und/oder berechneter Maschinenparameter überwacht wird, und wobei dann, wenn mindestens ein überwachter Maschinenparameter einen Grenzwert erreicht, auf eine Maschinenzustandsveränderung, insbesondere einen kritischen Betriebszustand der Maschine, geschlossen wird, und wobei mindestens ein überwachter Maschinenparameter in Abhängigkeit mindestens eines weiteren Maschinenparameters in definierten Betriebspunktbereichen der Maschine überwacht wird, wobei dann, wenn innerhalb eines definierten Betriebspunktbereichs mindestens ein überwachter Maschinenparameter mindestens einen betriebspunktbereichindividuellen Grenzwert erreicht, auf eine Maschinenzustandsveränderung geschlossen wird. (Fig. 1)

## Beschreibung

Die Erfindung betrifft ein Verfahren zur Maschinenzustandsüberwachung nach dem Oberbegriff des Anspruchs 1.

Die Zustandsüberwachung von Maschinen, die auch mit dem Begriff Condition Monitoring bezeichnet wird, betrifft die Erkennung von Zustandsveränderungen an einer zu überwachenden Maschine, um insbesondere kritische Betriebszustände der Maschine rechtzeitig zu erkennen und um so zum Beispiel einer Beschädigung der Maschine vorzubeugen. Aus der Praxis sind bereits Verfahren zur Maschinenzustandsüberwachung einer Maschine bekannt, wobei bei aus der Praxis bekannten Verfahren während des Betriebs der zu überwachenden Maschine mindestens ein Maschinenparameter überwacht wird, nämlich derart, dass dann, wenn mindestens ein überwachter Maschinenparameter einen Grenzwert erreicht, auf eine Maschinenzustandsveränderung, insbesondere einen kritischen Betriebszustand der Maschine, geschlossen wird. Hierbei ist es zum Beispiel möglich, Maschinenparameter wie zum Beispiel einen elektrischen Strom, eine elektrische Spannung, eine Temperatur, einen Druck oder auch Schwingungen an der zu überwachenden Maschine zu überwachen mit einem für den gesamten Betriebsbereich der Maschine gültigen, globalen Grenzwert zu vergleichen. So ist es zum Beispiel bekannt, auf Grundlage einer über den gesamten Betriebsbereich der Maschine durchgeführten Schwingungsanalyse einen kumulierten Schwingungswert zu ermitteln und diesen kumulierten Schwingungswert mit einem für den gesamten Betriebsbereich gültigen, globalen Grenzwert zu vergleichen, wobei dann, wenn der kumulierte Schwingungswert den globalen Grenzwert erreicht, auf eine Maschinenzustandsveränderung geschlossen wird. Obgleich mit solchen aus der Praxis bekannten Verfahren bereits eine Zustandsüberwachung an Maschinen realisiert werden kann, ist deren Aussagekraft jedoch eingeschränkt.

Hievon ausgehend liegt der Erfindung die Aufgabe zu Grunde, ein neuartiges Verfahren zur Maschinenzustandsüberwachung zu schaffen. Diese Aufgabe wird durch ein Verfahren gemäß Anspruch 1 gelöst. Erfindungsgemäß wird mindestens ein überwachter Maschinenparameter in Abhängigkeit mindestens eines weiteren Maschinenparameters in definierten Betriebspunktbereichen überwacht, wobei dann, wenn innerhalb eines definierten Betriebspunktbereichs mindestens ein überwachter Maschinenparameter mindestens einen betriebspunktbereichindividuellen Grenzwert erreicht, auf eine Zustandsveränderung geschlossen wird.

Mit der hier vorliegenden Erfindung wird ein völlig neuartiges Verfahren zur Maschinenzustandsüberwachung vorgeschlagen. So liegt es im Sinne der hier vorliegenden Erfindung, dass mindestens ein überwachter Maschinenparameter in Abhängigkeit mindestens eines weiteren Maschinenparameters in definierten Betriebspunktbereichen überwacht wird, wobei dann, wenn innerhalb eines definierten Betriebspunktbereichs mindestens ein überwachter Maschinenparameter mindestens einen individuellen Grenzwert erreicht, auf eine Maschinenzustandsveränderung geschlossen wird. Es liegt demnach im Sinne der hier vorliegenden Erfindung, Maschinenparameter nicht isoliert für sich global über den gesamten Betriebsbereich zu überwachen, sondern vielmehr Maschinenparameter abhängig von anderen Maschinenparametern für definierte Betriebspunktbereiche zu überwachen. Hiermit kann dann eine langfristige und fortschreitende Zustandsveränderung an einer Maschine zuverlässig erkannt werden.

Vorzugsweise wird ein Betriebsbereich der Maschine als mindestens eindimensionale Matrix in Betriebspunktbereiche untergliedert, wobei die Überwachung des oder jedes zu überwachenden Maschinenparameters in den Betriebspunktbereichen derart erfolgt, dass zunächst festgestellt wird, in welchen Betriebspunktbereich ein aktueller Betriebspunkt fällt, und dass dann die Überwachung des oder jedes zu überwachenden Maschinenparameters in Bezug auf den oder jeden entsprechenden betriebspunktbereichindividuellen Grenzwert erfolgt, insbesondere in solchen Betriebspunktbereichen des Betriebsbereichs, in welchen jeweils eine relativ große Anzahl der tatsächlich gefahrenen Betriebspunkte der Maschine fällt. Die obige Vorgehensweise erlaubt eine besonders effiziente Maschinenzustandsüberwachung. Wenn ein Betriebsbereich der Maschine in Betriebspunktbereiche untergliedert wird und die Überwachung ausschließlich in solchen Betriebspunktbereichen erfolgt, in welchen jeweils eine relativ große Anzahl tatsächlich gefahrener Betriebspunkte der Maschine fällt, kann unter optimaler Nutzung zur Verfügung stehender Ressourcen eine effektive Maschinenzustandsüberwachung bereit gestellt werden.

Dann, wenn ein überwachter Maschinenparameter in Abhängigkeit eines einzigen weiteren Maschinenparameters überwacht wird, erfolgt eine Untergliederung des Betriebsbereichs als eindimensionale Matrix bzw. als Vektor. Dann, wenn ein überwachter Maschinenparameter in Abhängigkeit von zwei weiteren Maschinenparametern überwacht wird, erfolgt eine Untergliederung des Betriebsbereichs als zweidimensionale Matrix. Dann, wenn ein überwachter Maschinenparameter in Abhängigkeit von einer Anzahl i weiteren Maschinenparametern überwacht wird, erfolgt eine Untergliederung des Betriebsbereichs als i-dimensionale Matrix.

Ein Betriebspunktbereich soll dabei als ein Bereich aus dem gesamten, globalen Betriebsbereich der Maschine verstanden werden, der bezogen auf die für den Betriebspunkt relevanten Maschinenparameter jeweils eine definierte Breite aufweist. Die für den Betriebspunktbereich relevanten Maschinenparameter bestimmen dabei dessen Dimension.

Nach einer vorteilhaften Weiterbildung der Erfindung wird ein Betriebspunkt zur Überwachung des oder jedes zu überwachenden Maschinenparameters nur dann verwendet, wenn derselbe für eine definierte Mindestzeitdauer im jeweiligen Betriebspunktbereich gefahren wurde. Vorzugsweise wird hierbei ein Verlassen des jeweiligen Betriebspunktbereichs um weniger als einen definierte Toleranzzeit zugelassen.

Dann, wenn der Betriebspunkt zur Überwachung nur dann verwendet wird, wenn derselbe eine definierte Mindestzeitdauer im jeweiligen Betriebspunktbereich gefahren wurde, kann die Zuverlässigkeit der Maschinenzustandsüberwachung gesteigert werden, da dann lediglich kurzzeitig gefahrene und wenig aussagekräftige Betriebspunkte nicht in die Maschinenzustandsüberwachung einfließen.

Über die Toleranzzeit bleibt ein lediglich kurzfristiges Verlassen eines Betriebspunktbereichs bei der Maschinenzustandsüberwachung unberücksichtigt, wodurch ohne Qualitätseinbußen für die Maschinenzustandsüberwachung deren Praktikabilität gesteigert werden kann.

Vorzugsweise erfolgt für einen aktuellen Betriebspunkt die Überwachung des oder jedes zu überwachenden Maschinenparameters im jeweiligen Betriebspunktbereich derart, dass zunächst für den aktuellen Betriebspunkt für den oder jeden zu überwachenden Maschinenparameter jeweils ein Mittelwert ermittelt wird, und dass anschließend die Überwachung des oder jedes für den aktuellen Betriebspunkt ermittelten Mittelwerts in Bezug auf den oder jeden betriebspunktbereichindividuellen Grenzwert erfolgt, nämlich derart, dass überprüft wird, ob mindestens einer der für den aktuellen Betriebspunkt ermittelten Mittelwerte von den jeweiligen für den gleichen Betriebspunktbereich aus vorausgehenden Betriebspunkten ermittelten Mittelwerten um mehr als einen entsprechenden betriebspunktbereichindividuellen Grenzwert abweicht. Die obige Auswertung erlaubt eine besonders einfache und effektive Maschinenzustandsüberwachung über eine statistische Auswertung des oder jedes zu überwachenden Maschinenparameters.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

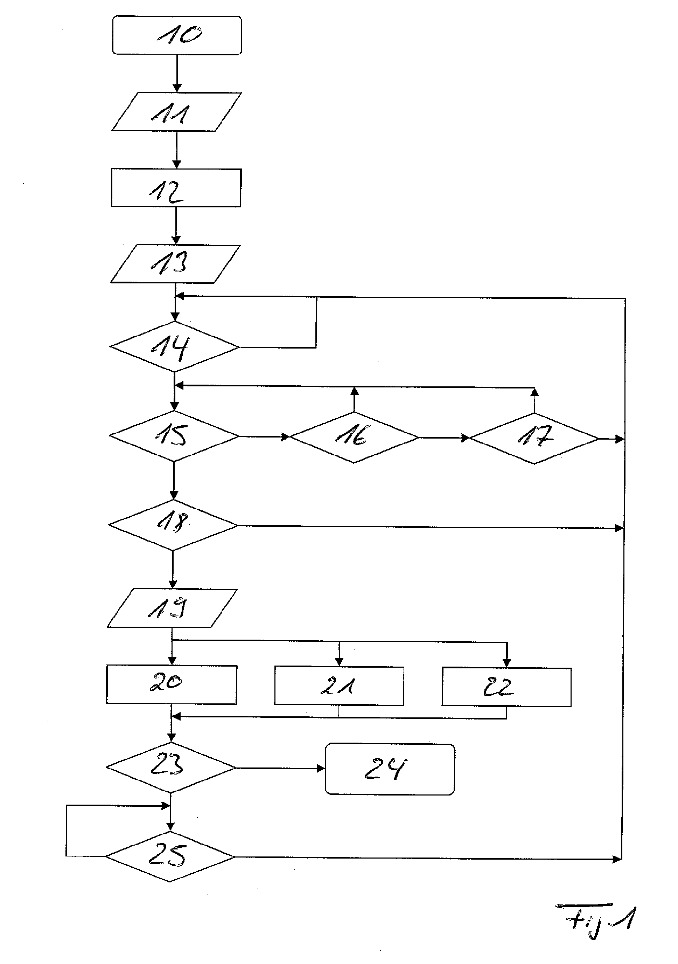

- Fig. 1:: ein Signalflussdiagramm zur Verdeutlichung des erfindungsgemäßen Verfahrens zur Maschinenzustandsüberwachung.

Die hier vorliegende Erfindung betrifft ein Verfahren zur Maschinenzustandsüberwachung, um Veränderungen eines Maschinenzustands, so zum Beispiel kritische Betriebszustände der Maschine, zu erkennen.

Nachfolgend wird die Erfindung für den bevorzugten Anwendungsfall beschrieben, in welchem als kritischer Betriebszustand ein Fouling an einer Turbomaschine, so zum Beispiel an einem Kompressor, überwacht werden soll. Unter Fouling werden Ablagerungen oder Verschmutzungen an der Turbomaschine verstanden, die sich während des Betriebs an derselben ausbilden. Das Verfahren wird dabei unter Bezugnahme auf das Signalflussdiagramm der Fig. 1 im Detail beschrieben.

Ein Block 10 des Signalflussdiagramms der Fig. 1 visualisiert den Start des erfindungsgemäßen Verfahrens zur Maschinenzustandsüberwachung, nämlich zur Überwachung des Foulings an einer Turbomaschine.

In einem Block 11 des erfindungsgemäßen Verfahrens werden zu überwachende Maschinenparameter vorgegeben. Bei der Erkennung eines Foulings an einer Turbomaschine handelt es sich bei den zu überwachenden Maschinenparametern vorzugsweise um einen Volumenstrom und um eine Enthalpiedifferenz, die einen Betriebsbereich der Turbomaschine in Form eines Kennfelds definieren.

Weiterhin werden in Block 11 Größen vorgegeben, um den Betriebsbereich der zu überwachenden Maschine, hier das vom Volumenstrom und der Enthalpiedifferenz abhängige Kennfeld der Turbomaschine, als vorzugsweise mehrdimensionale Matrix in mehrere Betriebspunktbereiche zu untergliedern.

So wird in Block 11 sowohl für die Enthalpiedifferenz als auch für den Volumenstrom jeweils eine Parameterbereichsbreite bzw. Felddimension für die Betriebspunktbereiche des Kennfelds definiert, wobei die Felddimensionen für die Betriebspunktbereiche benutzerseitig frei gewählt werden können.

Abhängig von den gewählten Felddimensionen bzw. Parameterbereichsbreiten für die Betriebspunktbereiche der Maschine wird der gesamte Betriebsbereich der Maschine, hier das Kennfeld der Turbomaschine, in eine Anzahl N Betriebspunktbereiche untergliedert, wobei in Block 11 zusätzlich eine Anzahl k (k < N) an Betriebspunktbereichen aus der Gesamtanzahl N an Betriebspunktbereichen vorgegeben wird, die zur praktikablen und ressourcenschonenden Durchführung des erfindungsgemäßen Verfahrens berücksichtigt werden sollen.

In einem Block 12 des erfindungsgemäßen Verfahrens werden nach Unterteilung des gesamten Betriebsbereichs der Maschine in die Anzahl N Betriebspunktbereiche während des Betriebs der zu überwachenden Maschine diejenigen Betriebspunktbereiche ermittelt, in welchen jeweils eine relativ große Anzahl der tatsächlich gefahrenen Betriebspunkte der Maschine fällt. In Block 12 werden demnach die k meistgefahrenen Betriebspunktbereiche aus der Gesamtanzahl N der Betriebspunktbereiche des Betriebsbereichs der Maschine ermittelt.

In einem Block 13 werden die Maschinenparameter definiert, die mittels nachfolgend auszuführenden Verfahrens gemessen und/oder berechnet werden, wobei es sich beim bevorzugten Anwendungsfall, nämlich bei der Erkennung eines Foulings an einer Turbomaschine, bei diesen in Block 13 vorgegeben, gemessenen und/oder berechneten Maschinenparametern vorzugsweise um eine Leitschaufelstellung der Turbomaschine, um einen Wirkungsgrad derselben sowie um weitere Maschinenparameter wie Temperaturen und Drucke derselben handeln kann.

Nachdem im Sinne der Blöcke 11, 12 und 13 einerseits der gesamte bzw. globale Betriebsbereich der Maschine in eine Gesamtanzahl N Betriebspunktbereiche im Sinne einer mehrdimensionalen Matrix untergliedert wurde und aus dieser Gesamtanzahl N der Betriebspunktbereiche die k meistgefahrenen Betriebspunktbereiche ermittelt wurden, erfolgt dann nachfolgend im Sinne der Blöcke 14 bis 25 die eigentliche Maschinenzustandsüberwachung, nämlich jeweils für die k meistgefahrenen Betriebspunktbereiche aus der Gesamtanzahl N von Betriebspunkten unter Verwendung der in Block 13 definierten Daten.

In einem Schritt 14 wird überprüft, ob ein aktueller Betriebspunkt der Maschine, hier der Turbomaschine, in einen der k meistgefahrenen Betriebspunktbereiche fällt oder nicht.

Wird in Schritt 14 festgestellt, dass ein aktueller gefahrener Betriebspunkt nicht in einen der k meistgefahrenen Betriebspunktbereiche fällt, so wird dieser aktuell gefahrene Betriebspunkt für die nachfolgende Maschinenzustandsüberwachung nicht verwendet, sondern vielmehr im Sinne der Rückverzweigung von Fig. 1 auf Block 14 zurück verzweigt.

Wird hingegen in Block 14 festgestellt, dass ein aktuell gefahrener Betriebspunkt in einen der k meistgefahrenen Betriebspunktbereiche fällt, so wird ausgehend von Block 14 auf Block 15 verzweigt und die Maschinenzustandsüberwachung fortgeführt.

In Block 15 wird überprüft, ob der aktuelle Betriebspunkt für eine Mindestzeitdauer im jeweiligen Betriebspunktbereich gefahren wurde. Ist dies nicht der Fall, wurde also der aktuelle Betriebspunkt nicht die zur Auswertung erforderliche Mindestzeitdauer im jeweiligen Betriebspunktbereich gefahren, so wird ausgehend von Block 15 auf Block 16 verzweigt und in Block 16 überprüft, ob der Betriebspunkt noch im jeweiligen Betriebspunktbereich liegt oder denselben verlassen hat. Wird in Block 16 festgestellt, dass der Betriebspunkt noch im entsprechenden Betriebspunktbereich liegt, so wird ausgehend von Block 16 auf Block 15 zurück verzweigt und weiter überprüft, ob die Mindestzeitdauer im jeweiligen Betriebspunktbereich erreicht wurde. Wird hingegen in Block 16 festgestellt, dass bei Noch-Nicht-Erreichen der Mindestzeitdauer im jeweiligen Betriebspunktbereich der aktuelle Betriebspunkt den jeweiligen Betriebspunktbereich verlassen hat, wird ausgehend von Block 16 auf Block 17 verzweigt und in Block 17 überprüft, ob das Verlassen des jeweiligen Betriebspunktbereichs um weniger als eine definierte Toleranzzeit erfolgte.

Ist dies nicht der Fall, ist also die Toleranzzeit für das Verlassen des jeweiligen Betriebspunktbereichs bei der Überwachung und Auswertung eines aktuell gefahrenen Betriebspunkts überschritten, so wird ausgehend von Block 17 auf Block 14 zurück verzweigt und die Zustandsüberwachung für diesen aktuellen Betriebspunkt nicht weiter durchgeführt.

Wird hingegen in Block 17 festgestellt, dass die Toleranzzeit für das Verlassen des jeweiligen Betriebspunktbereichs nicht überschritten wurde, dass also der Betriebspunktbereich vom aktuellen Betriebspunkt nur kurzfristig verlassen wurde, so wird ausgehend von Block 17 auf Block 15 verzweigt und mit der Maschinenzustandsüberwachung fortgefahren, nämlich derart, dass dann, wenn in Block 15 festgestellt wird, dass der aktuelle Betriebspunkt für die definierte Mindestzeitdauer im jeweiligen Betriebspunktbereich gefahren wurde, ausgehend von Block 15 auf Block 18 verzweigt wird.

In Block 18 kann eine optionale Filterung der Maschinenzustandsüberwachung bzw. der Überwachung des oder jedes zu überwachenden Maschinenparameters im jeweiligen Betriebspunktbereich des aktuell überwachten Betriebspunkts nach mindestens einem weiteren Maschinenparameter erfolgen.

Dann, wenn in Block 18 festgestellt wird, dass für den oder jeden weiteren Maschinenparameter eine unzulässig hohe Abweichung von einem Vergleichswert festgestellt wird, wird ausgehend von Block 18 auf Block 14 zurück verzweigt und die Überwachung des jeweiligen zu überwachenden Maschinenparameter für den aktuellen Betriebspunkt abgebrochen.

Bei der Überwachung des Foulingzustands an einer Turbomaschine kann es sich bei diesem weiteren Maschinenparameter, welcher der Filterung in Block 18 dient, zum Beispiel um eine Saugtemperatur der Turbomaschine handeln. Wird festgestellt, dass die Saugtemperatur im aktuellen Betriebspunktbereich des aktuell auszuwertenden Betriebspunkts um mehr als einen Grenzwert von einem entsprechenden Vergleichswert abweicht, so wird die weitere Zustandsüberwachung abgebrochen, um einen Einfluss einer Saugtemperaturabweichung auf das Erkennen des Foulings an der Turbomaschine und eine durch eine unzulässig hohe Saugtemperaturabweichung bewirkte Fehlerkennung des Foulings zu eliminieren.

Dann, wenn in Block 18 keine Ausfilterung des aktuellen Betriebspunkts erfolgt, wird ausgehend von Block 18 auf Block 19 verzweigt, wobei dann in Block 19 für den aktuellen Betriebspunkt, nämlich für die überwachten Maschinenparameter des aktuellen Betriebspunkts, jeweils ein entsprechender Mittelwert ermittelt und gespeichert wird.

Im Falle der Überwachung des Foulings an der Turbomaschine werden in Block 19 insbesondere für einen aktuellen Betriebspunkt ein Mittelwert der Leitschaufelstellung und ein Mittelwert des Wirkungsgrads für den aktuellen Betriebspunkt ermittelt und gespeichert.

Ausgehend von Block 19 und der entsprechenden Mittelwertbestimmung für den aktuellen Betriebspunkt der im aktuellen Betriebspunkt zu überwachenden Maschinenparameter wird dann auf Block 20, 21 und 22 verzweigt.

So wird im bevorzugten Ausführungsbeispiel der Überwachung des Foulings an einer Turbomaschine in Block 20 ein absolutes Minimum aller für den zum aktuellen Betriebspunkt passenden Betriebspunktbereich ermittelter und gespeicherter Mittelwerte der Leitschaufelstellung bestimmt.

In Block 21 wird für den zum aktuellen Betriebspunkt passenden Betriebspunktbereich das absolute Maximum aller für den zum aktuellen Betriebspunkt passenden Betriebspunktbereich ermittelter und gespeicherter Mittelwerte des Wirkungsgrads bestimmt.

In Block 22 wird aus den ermittelten und gespeicherten Mittelwerten des zum aktuellen Betriebspunkt passenden Betriebspunktbereichs mindestens eine Regressionssteigung bestimmt, hier eine Regressionssteigung der Mittelwerte der Leitschaufelstellung.

Darauffolgend wird von den Blöcken 20 und 21 und 22 auf Block 23 verzweigt, wobei in Block 23 überprüft wird, ob mindestens einer der für den aktuellen Betriebspunkt ermittelten Mittelwerte von den jeweiligen für den gleichen Betriebspunktbereich aus vorausgehenden Betriebspunkten ermittelten Mittelwerten um mehr als einen entsprechenden betriebspunktbereichindividuellen Grenzwert abweicht.

So wird für das bevorzugte Ausführungsbeispiel der Überwachung des Foulings an einer Turbomaschine überprüft, ob der für den aktuellen Betriebspunkt bestimmte Mittelwert der Leitschaufelstellung um mehr als einen Grenzwert vom absoluten Minimum der Leitschaufelstellung des entsprechenden Betriebspunktbereichs abweicht.

Für den Mittelwert des Wirkungsgrads wird in Block 23 überprüft, ob der für den aktuellen Betriebspunkt ermittelte Mittelwert des Wirkungsgrads um mehr als einen Grenzwert vom jeweiligen absoluten Maximum des entsprechenden Betriebspunktbereichs abweicht.

Für die Regressionssteigung wird in Block 23 überprüft, ob diese größer als ein individueller Grenzwert des entsprechenden Betriebspunktbereichs ist.

Wird in Block 23 für mindestens einen Mittelwert und/oder die Regressionssteigung eine derartige Abweichung festgestellt, so wird ausgehend von Block 23 auf Block 24 verzweigt und in Block 24 auf eine Maschinenzustandsveränderung, so zum Beispiel auf einen kritischen Betriebszustand der Maschine, geschlossen, wobei dann im bevorzugten Ausführungsbeispiel auf ein Fouling der Turbomaschine geschlossen wird.

Wird hingegen in Block 23 festgestellt, dass weder für einen der ermittelten Mittelwerte noch für die Regressionssteigung eine entsprechende Abweichung von einem entsprechenden betriebspunktindividuellen Grenzwert vorliegt, so wird ausgehend von Block 23 auf Block 25 verzweigt, wobei in Block 25 überprüft wird, ob für den zum aktuellen Betriebspunkt passenden Betriebspunktbereich eine definierte Wartezeit abgelaufen ist.

Ist dies nicht der Fall, so wird ausgehend von Block 23 auf Block 25 zurück verzweigt, und mit einer weiteren Ausführung der Maschinenzustandsüberwachung so lange gewartet, bis diese Wartezeit abgelaufen ist. Wird in Block 25 hingegen festgestellt, dass die Wartezeit abgelaufen ist, so wird ausgehend von Block 25 auf Block 14 zurück verzweigt und mit der Maschinenzustandsüberwachung fortgefahren.

Mit der hier vorliegenden Erfindung ist ein rechtzeitiges bzw. frühzeitiges Erkennen von Maschinenzustandsveränderungen und damit von kritischen Betriebszuständen an einer zu überwachenden Maschine möglich. So können Maschinenausfälle und Maschinenschäden vermieden werden.

Das erfindungsgemäße Verfahren erlaubt die Überwachung von Maschinenparametern in Abhängigkeit von anderen Maschinenparametern über die Untergliederung des Betriebsbereichs im Sinne einer mindestens eindimensionalen, vorzugsweise mehrdimensionalen, Matrix in Betriebspunktbereiche, bei welchen es sich um in quasistatische oder statische Betriebspunktbereiche des gesamten Betriebsbereichs der Maschine handelt. In solchen quasistatischen oder statischen Betriebspunktbereichen erfolgt ein quasistatischer oder statischer Betrieb der zu überwachenden Maschine. Dabei gilt die Annahme, dass ein zu überwachender Parameter, im gezeigten Ausführungsbeispiel eine zu überwachende Leitschaufelstellung oder ein zu überwachender Wirkungsgrad, innerhalb eines solchen quasistatischen oder statischen Betriebspunktbereichs im Wesentlichen unverändert bleibt und nur bei einer Maschinenzustandsänderung eine entsprechende Änderung des überwachten Parameters stattfindet.

Zur Ressourcenschonung werden nur die meistgefahrenen quasistatischen oder statischen Betriebspunktbereiche für das erfindungsgemäße Verfahren genutzt.

### Bezugszeichenliste

- 10: Block
- 11: Block
- 12: Block
- 13: Block
- 14: Block
- 15: Block
- 16: Block
- 17: Block
- 18: Block
- 19: Block
- 20: Block
- 21: Block
- 22: Block
- 23: Block
- 24: Block
- 25: Block

## Patentansprüche

1. Verfahren zur Maschinenzustandsüberwachung, wobei während des Betriebs einer Maschine mindestens ein gemessener und/oder berechneter Maschinenparameter überwacht wird, und wobei dann, wenn mindestens ein überwachter Maschinenparameter einen Grenzwert erreicht, auf eine Maschinenzustandsveränderung, insbesondere auf einen kritischen Betriebszustand der Maschine, geschlossen wird, **dadurch gekennzeichnet, dass** mindestens ein überwachter Maschinenparameter in Abhängigkeit mindestens eines weiteren Maschinenparameters in definierten Betriebspunktbereichen der Maschine überwacht wird, wobei dann, wenn innerhalb eines definierten Betriebspunktbereichs mindestens ein überwachter Maschinenparameter mindestens einen betriebspunktbereichindividuellen Grenzwert erreicht, auf eine Maschinenzustandsveränderung geschlossen wird.

2. Verfahren nach Anspruch 1, **dadurch gekennzeichnet, dass** ein Betriebsbereich der Maschine als mindestens eindimensionale Matrix in Betriebspunktbereiche untergliedert wird, und dass die Überwachung des oder jedes zu überwachenden Maschinenparameters in den Betriebspunktbereichen derart erfolgt, dass zunächst festgestellt wird, in welchen Betriebspunktbereich ein aktueller Betriebspunkt fällt, und dass dann die Überwachung des oder jedes zu überwachenden Maschinenparameters in Bezug auf den oder jeden entsprechenden betriebspunktbereichindividuellen Grenzwert erfolgt.

3. Verfahren nach Anspruch 1 oder 2, **dadurch gekennzeichnet, dass** die Überwachung des oder jedes zu überwachenden Maschinenparameters ausschließlich in einer definierten Anzahl von Betriebspunktbereichen des Betriebsbereichs der Maschine erfolgt, nämlich in solchen Betriebspunktbereichen des Betriebsbereichs, in welchen jeweils eine relativ große Anzahl der tatsächlich gefahrenen Betriebspunkte der Maschine fällt.

4. Verfahren nach einem der Ansprüche 1 bis 3, **dadurch gekennzeichnet, dass** die Überwachung des oder jedes zu überwachenden Maschinenparameters ausschließlich in quasistatischen Betriebspunktbereichen oder statischen Betriebspunktbereichen des Betriebsbereichs der Maschine erfolgt.

5. Verfahren nach einem der Ansprüche 1 bis 4, **dadurch gekennzeichnet, dass** ein Betriebspunkt zur Überwachung des oder jedes zu überwachenden Maschinenparameters nur dann verwendet wird, wenn derselbe für eine definierte Mindestzeitdauer im jeweiligen Betriebspunktbereich gefahren wurde.

6. Verfahren nach Anspruch 5, **dadurch gekennzeichnet, dass** hierbei ein Verlassen des jeweiligen Betriebspunktbereichs um weniger als einen definierte Toleranzzeit zugelassen wird.

7. Verfahren nach einem der Ansprüche 1 bis 6, **dadurch gekennzeichnet, dass** für einen aktuellen Betriebspunkt die Überwachung des oder jedes zu überwachenden Maschinenparameters im jeweiligen Betriebspunktbereich derart erfolgt, dass zunächst für den aktuellen Betriebspunkt für den oder jeden zu überwachenden Maschinenparameter jeweils ein Mittelwert ermittelt und gespeichert wird, und dass anschließend die Überwachung des oder jedes für den aktuellen Betriebspunkt ermittelten Mittelwerts in Bezug auf den oder jeden betriebspunktbereichindividuellen Grenzwert erfolgt, nämlich derart, dass überprüft wird, ob mindestens einer der für den aktuellen Betriebspunkt ermittelten Mittelwerte von den jeweiligen für den gleichen Betriebspunktbereich aus vorausgehenden Betriebspunkten ermittelten Mittelwerten um mehr als einen entsprechenden betriebspunktbereichindividuellen Grenzwert abweicht.

8. Verfahren nach Anspruch 7, **dadurch gekennzeichnet, dass** nach Ermittlung und Speicherung eines Mittelwerts für einen Betriebspunktbereich in demselben Betriebspunktbereich erst nach Ablauf einer definierten Wartezeit eine erneute Überwachung des oder jedes zu überwachenden Maschinenparameters im entsprechenden Betriebspunktbereich erfolgt.

9. Verfahren nach einem der Ansprüche 1 bis 8, **dadurch gekennzeichnet, dass** bei der Überwachung des oder jedes zu überwachenden Maschinenparameters in den definierten Betriebspunktbereichen eine Filterung nach mindestens einem weiteren Maschinenparameter derart erfolgt, dass dann, wenn für den oder jeden weiteren Maschinenparameter eine unzulässig hohe Abweichung von einem Vergleichswert festgestellt wird, der entsprechende Betriebspunkt zur Überwachung des oder jedes zu überwachenden Maschinenparameters nicht verwendet wird.

10. Verwendung des Verfahren zur Maschinenzustandsüberwachung nach einem der Ansprüche 1 bis 9 zur Ermittlung eines Foulings als kritischer Betriebszustand einer Turbomaschine, wobei als Betriebsbereich der Turbomaschine ein volumenstromanhängiges und enthalpiedifferenzabhängiges Kennfeld der Turbomaschine in Betriebspunktbereiche untergliedert wird, dass zunächst eine definierte Anzahl von am meisten gefahrenen Betriebspunktbereichen des Kennfelds ermittelt wird, und dass anschließend in diesen am meisten gefahrenen Betriebspunktbereichen als Maschinenparameter eine Leitschaufelstellung und/oder ein Wirkungsgrad der Turbomaschine überwacht werden, wobei dann, wenn innerhalb eines definierten Betriebspunktbereichs die überwachte Leitschaufelstellung und/oder der überwachte Wirkungsgrad einen betriebspunktbereichindividuellen Grenzwert erreicht, auf ein Fouling an der Turbomaschine geschlossen wird.
